(19) **Europäisches Patentamt**

**European Patent Office**

**Office européen des brevets**

(11) Veröffentlichungsnummer: **0 259 514**
**A1**

(12) **EUROPÄISCHE PATENTANMELDUNG**

(21) Anmeldenummer: **86112597.9**

(22) Anmeldetag: **11.09.86**

(51) Int. Cl.⁴: **G06F 1/02** , H04N 9/64

(43) Veröffentlichungstag der Anmeldung:
**16.03.88 Patentblatt 88/11**

(84) Benannte Vertragsstaaten:
**DE FR GB IT NL**

(71) Anmelder: **Deutsche ITT Industries GmbH**
**Hans-Bunte-Strasse 19 Postfach 840**
**D-7800 Freiburg(DE)**

(72) Erfinder: **Mehrgardt, Sönke, Dr.**
**Im Hägle 26**
**D-7801 March(DE)**
Erfinder: **Schemmann, Heinrich, Dipl.-Ing.**
**Waldkircher Strasse 14**
**D-7819 Denzlingen(DE)**

(74) Vertreter: **Morstadt, Volker, Dipl.-Ing.**
**c/o Deutsche ITT Industries GmbH**
**Patent/Lizenzabteilung Postfach 840**
**Hans-Bunte-Strasse 19**
**D-7800 Freiburg/Brsg.(DE)**

(54) **Digitalschaltung zur gleichzeitigen Erzeugung von digitalen Sinus- und Cosinusfunktionswerten.**

(57) Diese Schaltung liefert zu ein und demselben digitalen Argument (p) aus einem beliebigen Quadranten der Sinus-und Cosinusfunktion gleichzeitig die entsprechenden Sinus-und Cosinusfunktionswerte (s..,c..). Dazu dient im wesentlichen der Festwertspeicher (rm), in dessen beiden Speicherhälften (h1, h2) die vorzeichenstellenlosen Funktionswerte des ersten Halbquadranten bzw. des zweiten Halbquadranten der Cosinusfunktion einmal in Richtung zunehmender und einmal in Richtung abnehmender Argumente (p) abgelegt sind. Dabei ist die Stellenzahl (m) des Arguments (p) um drei größer als die Stellenzahl (n) der Funktionswerte inkl. von deren Vorzeichenstelle. Durch geschickte Invertierung der Adressen und der ausgelesenen Funktionswerte mittels der Vielfachinverter (i1, i2, i3) in Verbindung mit den Vielfachumschaltern (u1..u5) lassen sich die Sinus-und Cosinusfunktionswerte sowohl im Einer-als auch im Zweierkomplementcode für alle vier Quadranten erzeugen. Wird das Argument (p) mittels des Akkumulators (ak) gebildet, an dessen Eingang das frequenzbestimmende Digitalwort (f) liegt, so ist die Digitalschaltung ein digitaler Sinus/Cosinusoszillator.

FIG.1

## Digitalschaltung zur gleichzeitigen Erzeugung von digitalen Sinus-und Cosinusfunktionswerten

Die Erfindung betrifft eine Digitalschaltung zur gleichzeitigen Erzeugung von digitalen Sinus-und Cosinusfunktionswerten zu ein und demselben digitalen Argument aus einem beliebigen von deren vier Quadranten.

In der Zeitschrift "Elektronik", 1971, Heft 5, Seite 170 ist beschrieben, wie mittels Festwertspeichern digitale Sinusfunktionswerte mit hoher Auflösung und Genauigkeit speicherbar sind, nämlich dadurch, daß auf diejenige der trigonometrischen Funktionen zurückgegriffen wird, die für den Sinus der Summe zweier Winkel gilt: $\sin(x+y) = \sin x \cos y + \cos x \sin y$.

Da für Winkelwerte zwischen 0° und etwa 5° die Sinusfunktion und entsprechend für Winkelwerte zwischen 85° und 90° die Cosinusfuktion ungefähr gleich dem Winkel ist, kann aufgrund dieser Tatsache Festwertspeicherraum eingespart werden.

Die Erfindung beschäftigt sich jedoch nicht mit der digitalen Erzeugung digitaler Sinus-oder Cosinuswerte, sondern mit der gleichzeitigen Erzeugung von Sinus-und Cosinusfunktionswerten zu ein und demselben digitalen Argument über den gesamten Argumentbereich von 0° bis 360°, also für Argumente aus einem beliebigen der vier Quadranten dieser Winkelfunktionen.

Die Aufgabe der in den Ansprüchen umschriebenen Erfindung besteht darin, eine festwertspeicherraumsparende Anordnung zu schaffen und die Genauigkeit der erzeugten Sinus-und Cosinusfunktionswerte sowohl hinsichtlich ihres eigenen Quantisierungsfehlers als auch hinsichtlich des durch die Digitaldarstellung des Arguments bedingten Fehlers möglichst optimal zu machen. Aus der letztgenannten Forderung resultiert das Erfindungsmerkmal, daß bei Vorliegen des Arguments im vorzeichenlosen natürlichen Binärcode die Stellenzahl des Arguments um 2 größer als die Stellenzahl der Sinus-und Cosinusfunktionswerte inkl. Vorzeichenstelle sein muß. Würden nämlich diese beiden Stellenzahlen lediglich einander gleich sein, so wäre der Fehler, bedingt durch die Adressquantisierung, Pi mal so groß wie der, der durch die Ausgangsquantisierung sich ergibt.

Die Erfindung wird nun anhand der Figuren der Zeichnung näher erläutert.

Fig. 1 zeigt in Form eines schematischen Blockschaltbilds ein Ausführungsbeispiel der Erfindung,

Fig. 2 zeigt das schematische Blockschaltbild einer Weiterbildung der Anordnung nach Fig. 1,

Fig. 3 zeigt in Form eines schematischen Teil-Schaltbilds die Erweiterung der Anordnungen nach Fig. 1 und 2 zu einem digitalen Sinus/Cosinusoszillator, und

Fig. 4 zeigt das schematische Teil-Blockschaltbild einer Weiterbildung der Anordnung nach Fig. 3.

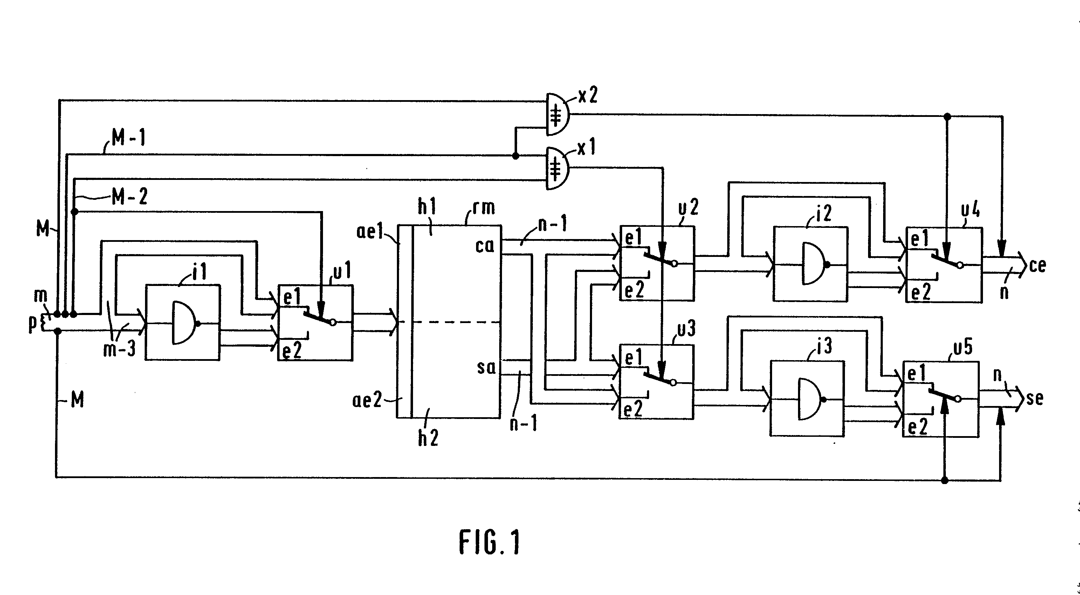

Beim Ausführungsbeispiel nach dem schematischen Blockschaltbild der Fig. 1 liegt das digitale Argument p im vorzeichenstellenlosen natürlichen Binärcode vor, und, wie bereits erwähnt, ist dessen Stellenzahl m um 2 größer als die Stellenzahl n der Sinus-und Cosinusfunktionswerte inkl. von deren Vorzeichenstelle. Dem ersten Vielfachinverter i1 sind von den m Stellen lediglich die m-3 niederwertigen Stellen zugeführt, dessen Einzelinverter die Stellensignale Stelle für Stelle invertieren.

Auf den Vielfachinverter i1 folgt der erste Vielfachumschalter u1, dessen erster Eingang e1 mit dem Eingang und dessen zweiter Eingang e2 mit dem Ausgang des ersten Vielfachinverters i1 stellenrichtig verbunden ist, so daß je nach Schaltstellung entweder die m-3 Stellen des Arguments p oder diese stellenweise invertiert zum Ausgang des ersten Vielfachumschalters u1 durchgeschaltet werden. Dessen Steuereingang ist mit dem dritthöchsten Stellensignal M-2 des Arguments p gespeist.

Der Ausgang des ersten Vielfachumschalters u1 ist stellenrichtig mit dem jeweiligen Adreßeingang ae1, ae2 der beiden Speicherhälften h1, h2 des Festwertspeichers rm verbunden. In der ersten bzw. zweiten Speicherhälfte h1, h2 sind die vorzeichenstellenlosen Funktionswerte des ersten Halbquadranten der Cosinusfunktion, in Richtung zunehmender Argumente p bzw. des zweiten Halbquadranten der Cosinusfunktion in Richtung abnehmender Argumente p, jeweils versetzt um den halben Wert ihrer niederstwertigen Stelle gespeichert, also in der ersten Speicherhälfte h1 die Cosinus-Funktionswerte von 0° bis 45° und in der zweiten Speicherhälfte h2 die von 90° bis 45°. Der ersten bzw. zweiten Speicherhälfte h1, h2 ist der Cosinusausgang ca bzw. der Sinusausgang sa zugeordnet.

Wie die Erfinder erkannt haben, lassen sich aus den Funktionswerten dieser beiden Halbquadranten zu jedem Argument p gleichzeitig der zugehörige Sinus-und Cosinus-Funktionswert bilden. Dabei werden beide Speicherhälften h1, h2 halbquadrantweise entweder in Richtung steigender oder in Richtung fallender Argumente, also "vorwärts" oder "rückwärts" gelesen, was durch die bereits geschilderte Adresseninversion mittels des ersten Vielfachinverters i1 und des ersten Vielfachumschalters u1 realisiert wird.

Dies soll an einigen Beispielen erklärt werden. Bei Werten des Arguments p im ersten Halbquadranten (p = 0° bis 45°) werden aus den beiden Speicherhälften h1, h2 z. B. nacheinander für die Argumente p = 15° und 30° am Cosinusausgang ca Digitalsignale für die dezimalen Cosinuswerte 0,966 und $(1/2)3^{1/2}$ (das sind die tatsächlichen Werte) und am Sinusausgang sa Digitalsignale für die dezimalen Cosinuswerte 0,259 und 1/2 in dieser Reihenfolge ausgelesen (diese Werte entsprechen einem tatsächlichen Cosinusargument von 75° und 60°, sind aber auch die tatsächlichen Sinuswerte).

Bei Werten des Arguments p im zweiten Halbquadranten (p = 45° bis 90°) gelangen diese nur in ihrer Modulo-45°-Version an die Adreß-Eingänge ae1, ae2 des Festwertspeichers rm, da nur m-3 niederwertige Stellen des Arguments p benutzt werden; also 60° wird zu 15° und 75° zu 30°. Diese Adressen werden mittels des ersten Vielfachinverters i1 stellenweise invertiert, so daß aus 15° 30° und aus 30° 15° werden. Am Cosinusausgang ca werden also Digitalsignale für die dezimalen Cosinuswerte $(1/2)3^{1/2}$ und 0,966, dagegen am Sinusausgang sa Digitalsignale für die Cosinuswerte 1/2 und 0,259 ausgelesen.

Im dritten Halbquadranten (p = 90° bis 135°) wird aus den Beispielswerten des Arguments p = 105° und 120° wegen Modulo 45° wieder 15° und 30°, und, da die Adressen nichtinvertiert zum Festwertspeicher rm gelangen, treten an dessen Ausgängen die gleichen Funktionswerte wie beim Beispiel des ersten Halbquadranten auf. Im vierten Halbquadranten liegen die beim zweiten geschilderten Verhältnisse für die Argumente 150° und 165° vor. Entsprechendes gilt für den fünften und den siebten bzw. den sechsten und den achten Halbquadranten.

Der Ausgang der ersten Speicherhälfte h1 ist mit dem jeweils ersten Eingang e1 des zweiten und des dritten Vielfachumschalters u2, u3 verbunden, während der Ausgang der zweiten Speicherhälfte h2 zum jeweils zweiten Eingang e2 der beiden Vielfachumschalter u2, u3 führt. Die einzelnen Leitungen dieser Vielfacheingänge und Vielfachausgänge sind dabei wieder stellenrichtig miteinander verbunden. Der jeweilige Steuereingang der beiden Vielfachumschalter u2, u3 liegt am Ausgang des ersten Exklusiv-ODER-Gatters x1, dessen erstem Eingang das zweithöchste und dessen zweitem Eingang das dritthöchste Stellensignal M-1, M-2 des Argument p zugeführt ist.

Da einerseits die drei höchstwertigen Stellen M, M-1, M-2 des Arguments genau die Zuordnung auf die 8 Halbquadranten durchführen und ihre Signale die Binärwerte zwischen 000 und 111 annehmen können (000 entspricht dem ersten und 111 dem achten Halbquadranten) und da andererseits in den Figuren 1 bis 4 die gezeichnete Schalterstellung sämtlicher Schalter einem am jeweiligen Steuereingang liegenden Binärsignal Null entspricht, werden die beiden Vielfachumschalter u2, u3 in zweiten und dritten sowie im sechsten und siebten Halbquadranten aus der gezeichneten Position in die andere umgeschaltet. Dadurch liegt am Ausgang des zweiten Vielfachumschalters u2 während dieser Halbquadranten nicht das Ausgangssignal der ersten Speicherhälfte h1, sondern das der zweiten Speicherhälfte h2 und am Ausgang des dritten Vielfachumschalters u3 nicht das Ausgangssignal der zweiten Speicherhälfte h2, sondern das der ersten Speicherhälfte h1.

Im ersten Halbquadranten werden somit die obigen Beispielswerte 0,966 und $(1/2)3^{1/2}$ zum Ausgang des zweiten Vielfachumschalters u2 und die Beispielwerte 0,259 und 1/2 zum Ausgang des dritten Vielfachumschalters u3 durchgeschaltet. Im zweiten Halbquadranten dagegen liegen am Ausgang von u2 die Beispielwerte 1/2 und 0,259 bzw. am Ausgang von u3 die Beispielwerte $(1/2)3^{1/2}$ und 0,966. Das sind aber die tatsächlichen Cosinuswerte der Argumente 60° und 75° (bei u2) bzw. die tatsächlichen Sinuswerte zu den Argumenten 60° und 75° (bei u3).

Im dritten Halbquadranten liegen am Ausgang von u2 die Beispielswerte 0,259 und 1/2 (das sind die Beträge der tatsächlichen Cosinuswerte von 105° und 120°) und am Ausgang von u3 die Beispielwerte 0,966 und $(1/2)3^{1/2}$(das sind die tatsächlichen Sinuswerte von 105° und 120°).

Im vierten Halbquadranten liegen am Ausgang von u2 die Beispielwerte $(1/2)3^{1/2}$ und 0,966 (das sind die Beträge der tatsächlichen Cosinuswerte von 150° und 165°) und am Ausgang von u3 die Beispielwerte 1/2 und 0,259 (das sind die tatsächlichen Sinuswerte von 150° und 165°).

Der Ausgang des zweiten Vielfachumschalters u2 liegt am Eingang des zweiten Vielfachinverters i2 und am ersten Eingang e1 des vierten Vielfachumschalters u4, während der Ausgang des dritten Vielfachumschalters u3 am Eingang des dritten Vielfachinverters i3 und am ersten Eingang e1 des fünften Vielfachumschalters u5 liegt. Der Steuereingang des vierten Vielfachumschalters u4 liegt am Ausgang des zweiten Exklusiv-ODER-Gatters x2, dessen erstem Eingang das höchste Stellensignal M und dessen zweitem Eingang das zweithöchste Stellensignal M-1 des Arguments p zugeführt ist.

Das Ausgangssignal des vierten Vielfachumschalters u4 bildet zusammen mit dem als Vorzeichensignal dienenden Ausgangssignal des zweiten Exklusiv-ODER-Gatters x2 den vorzeichenbehafteten Cosinus-Funktionswert ce im Einerkomplementcode. Dieses Signal hat die geforderten n Stellen.

Dem Steuereingang des fünften Vielfachumschalters u5 ist das höchste Stellensignal M des Arguments p zugeführt, und dieses bildet zugleich das Vorzeichensignal des vorzeichenbehafteten Sinusfunktionswerts se im Einerkomplementcode; es tritt daher, ebenso wie das Ausgangssignal des zweiten Exklusiv-ODER-Gatters x2 zum Ausgangssignal des vierten Vielfachumschalters u4 hinzutritt, zum Ausgangssignals des fünften Vielfachumschalters u5 hinzu, so daß der vorzeichenbehaftete Sinusfunktionswert se ebenfalls n Stellen aufweist.

Somit wird das Ausgangssignal des zweiten Vielfachumschalters u2 durch die Exklusiv-ODER-Verknüpfung des höchsten und des zweithöchsten Stellensignals M, M-1 während des dritten bis sechsten Halbquadranten invertiert und zugleich die dann darin auftretende logische Eins in der Vorzeichenstelle des Cosinusfunktionswerts ce übernommen, was, wie beim Einerkomplementcode üblich, einen negativen Funktionswert ce kennzeichnet.

Für den fünften Umschalter u5 und den Sinusfunktionswert se gilt eine ähnliche Betrachtung; es wird nämlich während des fünften bis achten Halbquadranten das Ausgangssignal des dritten Vielfachumschalters u3 invertiert an den Ausgang des fünften Vielfachumschalters u5 gelegt und zugleich die höchste Stelle M als Vorzeichensignal des Sinusfunktionswerts se benutzt; im fünften bis achten Halbquadranten ist die Sinusfunktion per definitionem jedoch negativ.

Bei den obigen Beispielswerten werden also die obigen Betragswerte des Cosinus aus dem dritten bzw. vierten Halbquadranten durch die den negativen Wert kennzeichnende Stelle ergänzt und stellenweise invertiert, so daß die Ausgangsfunktionswerte ce dezimal -0,259 und -1/2 bzw. -(1/2)·$3^{1/2}$ und -0,966 betragen.

Bei der Anordnung nach Fig. 1 ergeben sich die Cosinus-und die Sinusfunktionswerte ce, se entsprechend den mathematischen Funktionen +cosp, +sinp. Es lassen sich jedoch auch die drei weiteren Paare +cosp, -sinp; -cosp, +sinp; -cosp, -sinp in einfacher Weise erzeugen. Dazu ist für -cosp zwischen dem Ausgang des zweiten Exklusiv-ODER-Gatters x2 und dem Steuereingang des vierten Vielfachumschalters u4 ein Inverter einzufügen, dessen Ausgangssignal auch als Vorzeichensignal des Ausgangsfunktionssignals ce dienen muß. In vergleichbarer Weise ist für -sinp das Stellensignal M zu invertieren, dem Steuereingang des fünften Vielfachumschalters u5 zuzuführen und als Vorzeichensignal des Ausgangsfunktionssignals se zu benutzen.

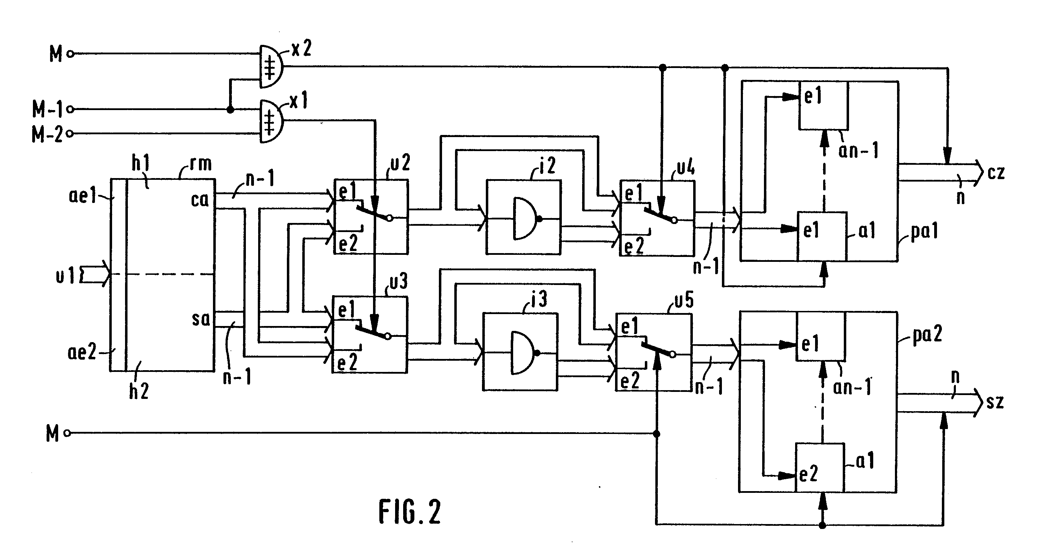

In Fig. 2 ist schematisch ausschnittsweise die Anordnung von Fig. 1 durch eine Beschaltung erweitert gezeigt, mit der die Funktionswerte im Einerkomplementcode in solche im Zweierkomplementcode übergeführt werden können (die signalflußmäßig vor dem Festwertspeicher rm liegenden Teile der Fig. 1 sind weggelassen, jedoch gedanklich zu ergänzen).

In Fig. 2 ist dem Ausgang des vierten Vielfachumschalters u4 der erste Parallelhalbaddierer pa1 nachgeschaltet, bei dem die ersten Eingänge e1 von dessen einzelnen Halbaddierern a1, an-1 mit dem jeweiligen Ausgang der Einzelumschalter des vierten Vielfachumschalters u4 stellenrichtig verbunden sind. Der zweite Eingang e2 des niederstwertigen Halbaddierers a1 ist mit dem Ausgang des zweiten Exklusiv-ODER-Gatters x2 verbunden, während jeder zweite Eingang e2 der übrigen Halbaddierer mit dem Übertrag-Ausgang des jeweils stellenniedrigeren Halbaddierers verbunden ist, was in Fig. 2 durch den gestrichelten Pfeil angedeutet ist. Die Ausgänge der Halbaddierer liefern zusammen mit dem Ausgangssignal des zweiten Exklusiv-ODER-Gatters x2 als Vorzeichenstelle die Cosinusfunktionswerte cz im Zweierkomplement. Auch diese Funktionswerte haben wiederum n Stellen, wie gefordert.

Dem Ausgang des fünften Vielfachumschalters u5 ist der zweite Parallelhalbaddierer pa2 nachgeschaltet, bei dem die ersten Eingänge e1 seiner einzelnen Halbaddierer a1, an-1 mit dem jeweiligen Ausgang der Einzelumschalter des fünften Vielfachumschalters u5 stellenrichtig verbunden sind. Dem zweiten Eingang e2 des niederstwertigen Halbaddierers a1 ist das höchste Stellensignal M des Arguments p zugeführt, während jeder zweite Eingang e2 der übrigen Halbaddierer mit dem Übertrag-Ausgang des jeweils stellenniedrigeren Halbaddierers verbunden ist. Die Ausgänge der einzelnen Halbaddierer liefern zusammen mit dem höchsten Stellensignal M des Arguments p als Vorzeichenstelle die Sinusfunktionswerte sz im Zweierkomplement.

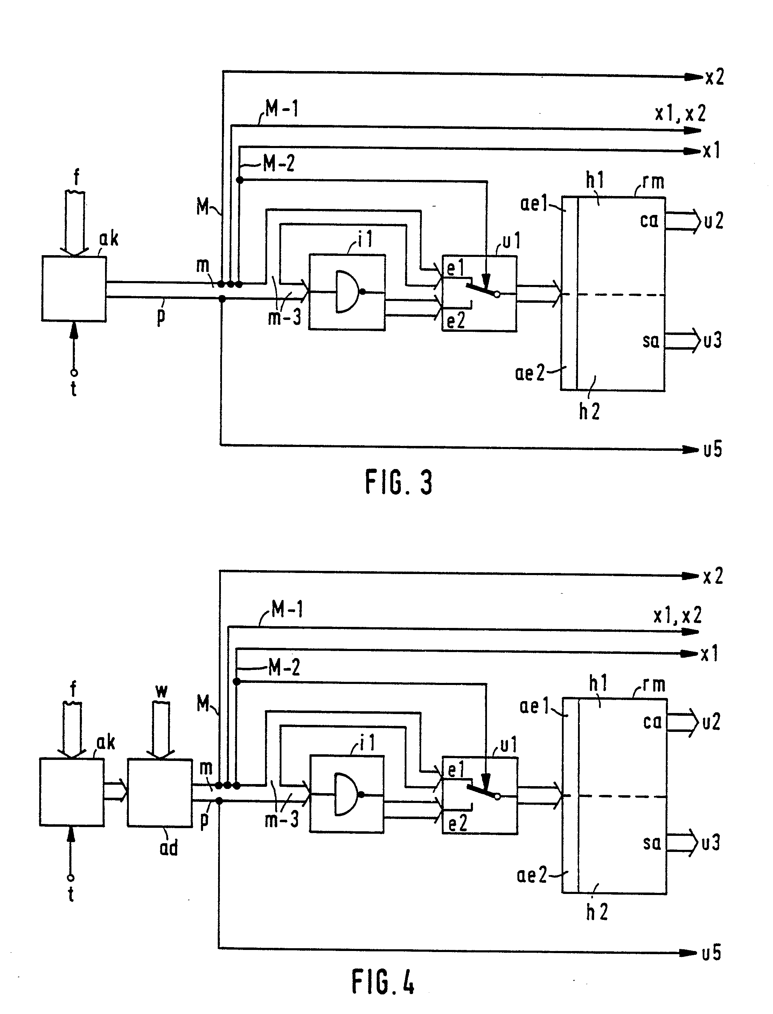

In Fig. 3 ist ausschnittsweise schematisch gezeigt, wie die Anordnungen nach den Fig. 1 und 2 zu digitalen Sinus/Cosinus-Oszillatoren erweitert werden können. Hierzu ist es lediglich erforderlich, daß die Argumente p mittels des digitalen Akkumulators ak gebildet werden, an dessen Eingang das die Frequenz des Oszillators bestimmende Digitalwort f gelegt ist und dessen Aufsummieren mit der Frequenz des Taktsignals t erfolgt, d.h. dass das Taktsignal t das Aufsummieren steuert.

Ein digitaler Akkumulator ist bekanntlich ein Addierer mit nachgeschaltetem Zwischenspeicher, bei welcher Anordnung der erste Eingang des Addierers mit einem Digitalsignal gespeist ist, während der zweite Eingang des Addierers mit dem Ausgang des Zwischenspeichers verbunden ist, an dessen Eingang der Ausgang des Addierers liegt. Bei jedem Impuls des Taktsignals wird somit die Summe aus dem am ersten Eingang des Addierers liegenden Digitalwort und dem vorausgegangenen Aditionsergebnis gebildet. Liegt beispielsweise am Eingang des Addierers ein der dezimalen Eins entsprechendes Signal, so wird bei jedem Impuls des Taktsignals die Eins hinzuaddiert; es entsteht somit die Dezimalzahlenfolge 1, 2, 3... Beim Oszillator nach Fig. 3 wird das die Frequenz bestimmende Digitalwort f aufsummiert, und am Ausgang des Akkumulators ak tritt somit ein dauernd sich änderndes Argument p auf. Im Bedarfsfall können vom Ausgangssignal des Akkumulators ak niederwertige Stellen unbenutzt bleiben.

Derartige Oszillatoren werden bevorzugt bei der Quadraturmodulation-oder demodulation verwendet, da hierbei bekanntlich die Multiplikation eines Signals mit einem anderen Signal, und zwar zum einen mit diesem anderen Signal selbst und zum anderen mit einem Signal, das um exakt 90° gegen dieses andere Signal phasenverschoben ist. Eine bevorzugte Anwendung derartiger Oszillatoren besteht bei der digitalen Farbdemodulation in einem digitalen Farbfernsehempfänger oder Videorecorder.

Bei der Weiterbildung des Oszillators nach Fig. 3, die in Fig. 4 gezeigt ist, ist dem Akkumulator ak der Addierer ad nachgeschaltet, dessen anderem Eingang das Phasendigitalwort w zugeführt ist. Dies kann z.B. bei der Einstellung der Tintphase des erwähnten Chromasignals sein, wobei dem Addierer ad während des Key-Impulses der nur dann von Null verschiedene Tint-Wert zugeführt wird.

Bei den Fig. 3 und 4 sind die Teile der Fig. 1 und 2, die signalflußmäßig hinter dem Festwertspeicher rm liegen, der Einfachheit halber weggelassen; diese Teile sind jedoch gedanklich zu ergänzen.

Auch für die Anordnungen der Figuren 2 bis 4 gilt das oben bezüglich der Funktionspaare +cosp, sinp; +cosp, -sinp; cosp, +sinp; -cosp, -sinp Gesagte entsprechend.

Die Erfindung wird bevorzugt als monolithisch intergrierte Halbleiter-Schaltung realisiert, wozu sich insbesondere die Isolierschicht-Feldeffekttransistor-Technik (MOS-Technik) eignet.

## Ansprüche

1. Digitalschaltung zur gleichzeitigen Erzeugung von digitalen Sinus-und Cosinusfunktionswerten (s..,c..), zu ein und demselben digitalen Argument (p) aus einem beliebigen von deren vier Quadranten

-mit einem Festwertspeicher (rm), in dessen erster bzw. zweiter Speicherhälfte (h1, h2) die vorzeichenstellenlosen Funktionswerte des ersten Halbquadranten der Cosinusfunktion in Richtung zunehmender Argumente (p) bzw. des zweiten Halbquadranten der Cosinusfunktion in Richtung abnehmender Argumente, jeweils verstzt um den halben Wert der niederstwertigen Stelle, abgelegt sind, wobei

--das Argument (p) im vorzeichenstellenlosen natürlichen Binärcode vorliegt und

--die Stellenzahl (m) des Arguments (p) um zwei größer als die Stellenzahl (n) der Funktionswerte inkl. von deren Vorzeichenstelle ist,

-mit einem ersten Vielfachinverter (i1), über dessen Einzelinverter jeweils ein Stellensignal der m-3 niederwertigen Stellen, des Arguments (p) geführt ist,

-mit einem ersten Vielfachumschalter (u1),

--dessen erster Eingang (e1) mit dem Eingang und dessen zweiter Eingang (e2) mit dem Ausgang des ersten Vielfachinverters (i1) stellenrichtig verbunden ist,

--dessen Steuereingang mit dem dritthöchsten Stellensignal (M-2) des Arguments (p) gespeist ist und

--dessen Ausgang mit dem jeweiligen Adreß-Eingang (ae1, ae2) beider Speicherhälften (h1, h2) derart stellenrichtig verbunden ist, daß bei steigendem Argument (p) die Cosinusfunktionswerte der ersten Speicherhälfte (h1) in fallender Richtung, dagegen die der zweiten Speicherhälfte (h2) in steigender Richtung ausgelesen werden,

-mit einem zweiten bzw. dritten Vielfachumschalter (u2, u3), dessen jeweils erster Eingang (e1) mit dem Ausgang der ersten bzw. zweiten Speicherhälfte (h1, h2) und dessen jeweils zweiter Eingang (e2) mit dem Ausgang der zweiten bzw. ersten Speicherhälfte (h2, h1) stellenrichtig verbunden ist,

-mit einem ersten Exklusiv-ODER-Gatter (x1), dessen erstem bzw. zweitem Eingang das zweithöchste bzw. dritthöchste Stellensignal (M-1, M-2) des Arguments (p) zugeführt ist und dessen Ausgang mit dem jeweiligen Steuereingang des zweiten und des dritten Vielfachumschalters (u2, u3) verbunden ist,

-mit einem zweiten bzw. dritten Vielfachinverter (i2, i3), der dem Ausgang des zweiten bzw. dritten Vielfachumschalters (u2, u3) nachgeschaltet ist,

-mit einem vierten bzw. fünften Vielfachumschalter (u4, u5), dessen jeweiliger erster Eingang (e1) am jeweiligen Eingang und dessen jeweiliger zweiter Eingang (e2) am jeweiligen Ausgang des zweiten bzw. dritten Vielfachinverters (i2, i3) liegt und an dessen jeweiligem Ausgang der vorzeichenlose digitale Cosinus-bzw. Sinusfunktionswert auftritt, und

-mit einem zweiten Exklusiv-ODER-Gatter (x2), dessen erstem bzw. zweitem Eingang das höchste bzw. zweithöchste Stellensignal (M, M-1) des Arguments (p) und dessen Ausgangssignal dem Steuereingang des vierten Vielfachumschalters (u4) zugeführt ist und zu dessen Ausgangssignal als Vorzeichensignal zur Bildung des vorzeichenbehafteten Cosinusfunktionswerts (ce) im Einerkomplementcode hinzutritt, wobei

--das höchste Stellensignal (M) des Arguments (p) dem Steuereingang des fünften Vielfachumschalters (u5) zugeführt ist und zu dessen Ausgangssignal als Vorzeichensignal zur Bildung des vorzeichenbehafteten Sinusfunktionswerts (se) im Einerkomplementcode hinzutritt.

2. Digitalschaltung nach Anspruch 1 mit Ausgangsfunktionswerten (cz, sz) im Zweierkomplementcode, gekennzeichnet durch

-einen dem Ausgang des vierten Vielfachumschalters (u4) nachgeschalteten ersten Parallelhalbaddierer (pa1), bei dessen einzelnen Halbaddierern (a1, an-1)

--die jeweiligen ersten Eingänge (e1) mit dem jeweiligen Ausgang der Einzelumschalter des vierten Vielfachumschalters (u4) stellenrichtig verbunden sind,

--der zweite Eingang (e2) des niederstwertigen Halbaddierers (a1) mit dem Ausgang des zweiten Exklusiv-ODER-Gatters (x2) verbunden ist,

--der jeweilige zweite Eingang (e2) der übrigen Halbaddierer mit dem Übertrag-Ausgang des jeweils stellenniedrigeren Halbaddierers verbunden ist und

--die Ausgänge zusammen mit dem Ausgangssignal des zweiten Exklusiv-ODER-Gatters (x2) als Vorzeichenstelle die Cosinusfunktionswerte (Cz) im Zweierkomplement liefern, und

-einen dem Ausgang des fünften Vielfachumschalters (u5) nachgeschalteten zweiten Parallelhalbaddierer (pa2), bei dessen einzelnen Halbaddierern (a1, an-1)

--die jeweiligen ersten Eingänge (e1) mit dem jeweiligen Ausgang der Einzelumschalter des fünften Vielfachumschalters (u5) stellenrichtig verbunden sind,

--dem zweiten Eingang (e2) des niederstwertigen Halbaddierers (a1) das höchste Stellensignal (m) des Arguments (p) zugeführt ist,

--der jeweilige zweite Eingang (e2) der übrigen Halbaddierer mit dem Übertrag-Ausgang des jeweils stellenniedrigeren Halbaddierers verbunden ist und

--die Ausgänge zusammen mit dem höchsten Stellensignal (M) des Arguments (p) als Vorzeichenstelle die Sinusfunktionswerte (sz) im Zweierkomplement liefern.

3. Digitaler Sinus/Cosinus-Oszillator mit einer Digitalschaltung nach Anspruch 1 oder 2, dadurch gekennzeichet, daß die Arguments (p) mittels eines digitalen Akkumulators (ak) erzeugt sind, an dessen Eingang ein die Frequenz des Oszillators bestimmendes Digitalwort (f) liegt und dessen Aufsummieren von einem Taktsignal (t) gesteuert ist.

4. Oszillator nach Anspruch 3, dadurch gekennzeichnet, daß dem Akkumulator (ak) ein Addierer (ad) nachgeschaltet ist, dessen anderem Eingang ein Phasendigitalwort (w) zugeführt ist.

5. Oszillator nach Anspruch 4, dadurch gekennzeichnet, daß das Phasendigitalwort (w) die Tint-Phase des Chromasignals in einem digitalen Farbfernsehempfänger ist und daß es während des Key-Impulses dem anderen Eingang des Addierers (ad) zugeführt ist.

6. Digitalschaltung nach einem der Ansprüche 1 bis 5, gekennzeichnet durch ihre Realisierung in monolithisch integrierter Halbleitertechnik.

FIG. 1

FIG.2

0 259 514

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 544 106 (LICENTIA PATENT-VERWALTUNGS-GmbH) * Seite 1, Zeilen 17-20; Seite 3, Zeile 6 - Seite 4, Zeile 20; Figuren 1-4 * | 1-3,6 | G 06 F 1/02 H 04 N 9/64 |
| Y | | 4,5 | |
| Y | US-A-4 562 460 (HARWOOD) * Figur 2 * | 4,5 | |
| A | US-A-4 159 527 (YAHATA et al.) * Spalte 5, Zeilen 35-68 * | 1 | |
| A | US-A-3 824 498 (McBRIDE) * Figur 10; Spalte 7, Zeilen 50-68 * | 2 | |
| A | US-A-3 633 017 (CROOKE et al.) * Figur 1 * | 4 | **RECHERCHIERTE SACHGEBIETE (Int. Cl.4)** G 06 F H 04 N |
| A | GB-A-2 160 375 (PHILIPS UK) * Seite 1, Zeilen 16-17 * | 6 | |

Der vorliegende Recherchenbericht wurde für alle Patentansprüche erstellt.

| Recherchenort | Abschlußdatum der Recherche | Prüfer |
|---|---|---|
| DEN HAAG | 14-05-1987 | BEINDORFF W.H. |